# EUROPEAN PATENT APPLICATION

(11) **EP 4 386 664 A1**
(43) Date of publication of application: **19.06.2024**
(21) Application number: 23211548.5
(22) Date of filing: 22.11.2023
(51) Int. Cl.: G06T 7/00

(54) **A METHOD OF IDENTIFYING NON-CONFORMANCE OF A COMPONENT**

(30) Priority: 14.12.2022 GB 202218822
(71) Applicant: Rolls-Royce plc, London N1 9FX (GB)
(72) Inventor: Mulloth, Akhil, Derby, DE24 8BJ (GB)
(74) Representative: Rolls-Royce plc

(57) **Abstract**

There is disclosed a method of identifying non-conformance of a manufactured component, the method comprising: performing a volumetric scan to generate a 3-dimensional (3D) image of a volume of space containing the component, the 3D image comprising a plurality of voxels, each voxel representing a sub-volume within the volume of space and assigned a voxel value relating to properties of the material in the sub-volume; generating a component histogram giving the frequency of each voxel value within the volume of space; and comparing the component histogram to a template histogram, and identifying differences between the component histogram and the template histogram, and based on the comparison, determining whether there is a defect in the component.

## Description

The present disclosure concerns a method of identifying non-conformance of a manufactured component.

Safety critical components or components which have complex manufacturing method may require individual testing or analysis to ensure that they meet desired manufacturing tolerances. Identifying internal defects in a component is complex and computationally inefficient, even when there are large defects.

According to a first aspect there is provided a method of identifying non-conformance of a manufactured component, the method comprising:
performing a volumetric scan to generate a 3-dimensional (3D) image of a volume of space containing the component, the 3D image comprising a plurality of voxels, each voxel representing a sub-volume within the volume of space and assigned a voxel value relating to properties of the material in the sub-volume;
generating a component histogram giving the frequency of each voxel value within the volume of space; and
comparing the component histogram to a template histogram, and identifying differences between the component histogram and the template histogram, and
based on the comparison, determining whether there is a defect in the component.

It may be that the voxel value relates to the properties of the material within the respective sub-volume, as detected from how incident electromagnetic waves interacted with that sub-volume of space. The volumetric scan may comprise computational tomography (i.e., CT scan) using x-rays or gamma rays.

It may be that the comparison comprises comparing a characteristic of the component histogram and the template histogram, wherein the characteristic comprises any of;
peak frequencies of voxel value;
integrated total area;
standard deviation of voxel value;
height of peak frequencies;
mean voxel value;
width of a frequency bell curve;
gradient of a frequency bell curve;
median voxel value; and/or
onset of a curve up to a peak.

The onset of the curve up to a peak may require identification of a peak voxel value by finding the voxel value at which the gradient of a curve joining points on the histogram is zero, and determining the onset of a curve at a voxel value above or below the peak voxel value at which the gradient is above or below a threshold gradient. It may be that the identification of differences comprises using machine learning or artificial intelligence.

The characteristic which is compared between the component histogram and the template histogram may comprise multiple characteristics which are combined in a pre-determined equation or based on training data for machine learning.

It may be that determining that there is a defect is based on the comparison of the characteristic of the component histogram to the template histogram showing a difference beyond a threshold. It may be that the threshold is determined dependent on the geometry of the component and/or the materials within the component.

It may be that the defect is a gross defect which requires scrapping or remaking of the component.

It may be that the template histogram is derived by performing a volumetric scan on one or more components known to have few or no defects.

It may be that the template histogram is derived by performing CT on one or more components known to have a common defect, where the defect may be expected.

It may be that the method further comprises: performing thresholding to separate the component from a background within the volume of space, generating the component histogram based on the voxels from the component only, by removing the voxels from the background.

It may be that the method comprises: splitting the volume of space into separate smaller secondary-volumes; and generating separate component histograms for each secondary-volume and comparing against a respective histogram template.

It may be that the volume of space is split into expected materials of a multi-material component, such that a component histogram may be generated for each material and compared against a respective template histogram. This may help to identify the location of a defect if found.

It may be that the method comprises performing x-ray computational tomography.

According to a second aspect, there is provided a non-transitory computer readable medium comprising computer-readable instructions that, when read by a computer, causes the performance of a method in accordance with the first aspect.

According to a third aspect, there is provided a computer program that, when read by a computer causes the performance of a method in accordance with the first aspect.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
Figure 1 is a sectional side view of a gas turbine engine;
Figure 2 schematically shows a 3D volumetric scan of a manufactured component;
Figure 3 is a flow chart showing steps of a method of identifying non-conformance of the component;
Figure 4 is a flow chart showing steps of a method of comparing histograms; and
Figure 5 is an example histogram generated in the method of Figure 3, for identifying non-conformance.

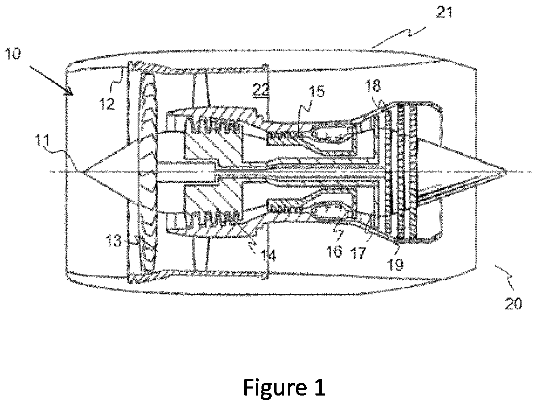

With reference to Figure 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

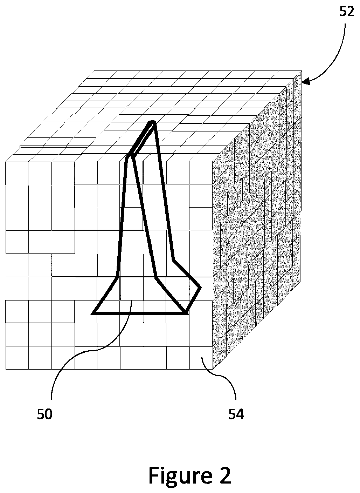

**Figure 2** shows a manufactured component 50, which in this example is a turbine blade. The component 50 is shown within a volume of space 52 for imaging, which is divided into a plurality of sub-volumes 54 of equal size.

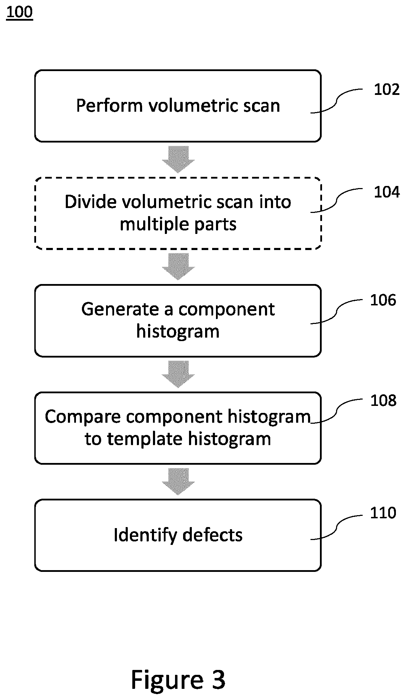

**Figure 3** is a flow chart showing steps of a method 100 of identifying non-conformance of a manufactured component 50, such as the turbine blade 50 shown in Figure 2.

The method 100 comprises block 102 in which a volumetric scan is performed. The volumetric scan may be any scan which is capable of generating a 3-dimensional (3D) image of the volume of space 52 containing the component 50 by dividing the volume of space 52 into sub-volumes 54 and assigning values to each of the sub-volumes 54. In this example, the volumetric scan is a computational tomography (CT) scan using x-rays. In other examples, the CT scan may be using gamma rays, or the volumetric scan may be any other suitable scanning method which can generate a 3D image.

A 3D image is generated in block 102 of the volume of space 52 including the component 50. The 3D image comprises a plurality of voxels, with each voxel representing a respective sub-volume 54 of the volume of space 52. Each voxel is assigned a voxel value relating to properties of the material within the respective sub-volume 54 which the voxel represents. Voxel values in CT scans are typically referred to as a Grey-scale value between 0 and a high number, such as 100. The voxel value in the x-ray CT scan represents the opacity of the material within the sub-volume to x-rays, with the 3D image being generated based on detection of incident x-rays passing through the volume of space 52. Therefore, the voxel value of each sub-volume 54 indicates how incident electromagnetic waves interact with the respective sub-volume 54. The opacity of the material to x-rays relates to the properties of the material, such as the material type and density with a denser material resulting in a higher voxel value than a less dense material.

In block 104, the method 100 may comprise dividing the volumetric scan into multiple parts. For example, the entire 3D image generated in the volumetric scan may be separated into different sections in a predefined fashion, such as by separating a plurality of different blades in the same scan. In some examples, the volume of space may be divided into separate smaller secondary volumes, such as by dividing the volume of space into 27 equal sized cubic volumes (i.e., a matrix of 3 x 3 x 3 smaller secondary volumes, which together may the whole volume of space 52). In other examples, the volume of space 52 may be split into no-equal parts, for example, into expected materials of a multi-material component.

The method 100 may comprise performing thresholding on the data generated by the volumetric scan to separate a shape of the voxels which belong to the component 50 from the voxels which belong to an empty background in the volume of space 52. Thresholding may include selecting a voxel value at which an edge or background may be identified, and separating the histogram into parts based on the selected voxel value, or using the voxel value as a starting point at which to review neighbouring voxels to determine where an edge of the component or background starts.

In other examples, the method 100 may not include block 104 and/or thresholding, and may simply continue without dividing the volumetric scan into multiple parts and/or without separating the component from the background. The thresholding is more computationally intensive than the dividing of the volumetric scan in a predefined manner in block 104.

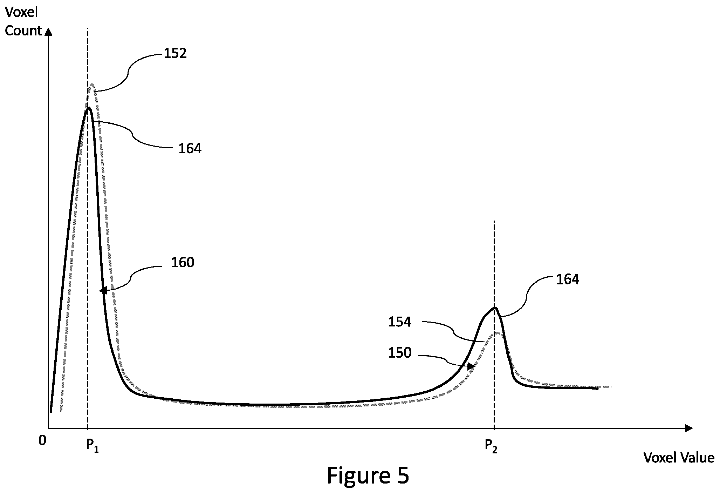

In block 106, the method 100 comprises generating a component histogram 150 in which a chart is made of the frequency of each voxel value within the volume of space 52. Figure 5 shows an example component histogram 150, generated from the turbine blade in Figure 2 for example, as a dotted line on a graph mapping voxel value on the x-axis and voxel count on the y-axis. It will be appreciated that, in some examples, when the method 100 includes block 104, multiple component histograms may be generated each based on a respective smaller secondary volume of space. For example, in a method in which the volumetric scan is divided into multiple smaller secondary volumes in block 104, the component histogram of only the voxels corresponding to a smaller secondary volume may be generated in block 106, by removing the voxels from the other secondary volumes.

The example component histogram 150 shown in Figure 5 has two distinct peaks. A first peak 152 is close to a voxel value of zero and represents the empty space in the volume of space 52. Th empty space may include the background and internal cavities in the component 50. A second peak 154 in this example represents a single material that the component 50 is made from. If there are multiple materials in the component which are not separated into separate component histograms, or a single material with varying densities, there may be more than two peaks in the component histogram. If the component histogram represents only the component 50 due to the background voxels being removed, there may be only a single peak, or no obvious peak in the component histogram.

In block 108, the method 100 comprises comparing the component histogram 150 to a template histogram 160 to identify differences between the component histogram 150 and the template histogram 160. If there are multiple component histograms representing different secondary volumes or materials, each separate component histogram may be compared to a respective template histogram.

The template histogram 160 may be derived by performing a similar volumetric scan, such as an x-ray CT scan, on one or more components known to have few or no defects. Performing the volumetric scan on multiple components known to have no defects, and averaging the voxel counts at each voxel value, to produce the template histogram, can account for allowable tolerances in manufacturing which will produce some variation in the component. In other examples, the template may be derived by performing a volumetric scan on a component known to have a specific defect, which may be a common defect. In yet further examples, the template histogram may be theoretically derived based on a defect free component, or a component with a known defect. By comparing the component histogram 150 to a template histogram 160, defects may be identified in the component 50. For example, when the template histogram represents a defect free component, any deviation of the component histogram 150 from the template histogram may indicate a defect. When the template histogram represents a component with a known defect, a defect may be identified in the component if the component histogram 150 corresponds with the template histogram.

In block 110, the method 100 comprises determining whether there is a defect in the component 50 based on the comparison between the component histogram 150 and the template histogram 160. In this example, the template histogram 160 represents a component which has no defects. Therefore, differences between the component histogram 150 and the template histogram 160 may indicate the presence of a defect in the component 50. If image scan data is separated into multiple component histograms representing a different material, or smaller secondary volumes of space, if differences between respective component histograms and template histograms are found, this may help to identify the location of a defect.

Figure 5 shows an example template histogram 160 as a solid line. The template histogram in this example also comprises a first peak 162 and a second peak 164 which are in similar locations to the first peak 152 and second peak 154 respectively of the component histogram 150. It can be readily seen that there are differences between the component histogram 150 and the template histogram 160. For example, the voxel count of the first peak 152 of the component histogram 150 is higher than the voxel count of the first peak 162 of the template histogram 160. The second peak 154 of the component histogram 150 has a lower voxel count than the second peak 164 of the template histogram 160. This could indicate the presence of unexpected cavities in the component 50, where there is supposed to be material.

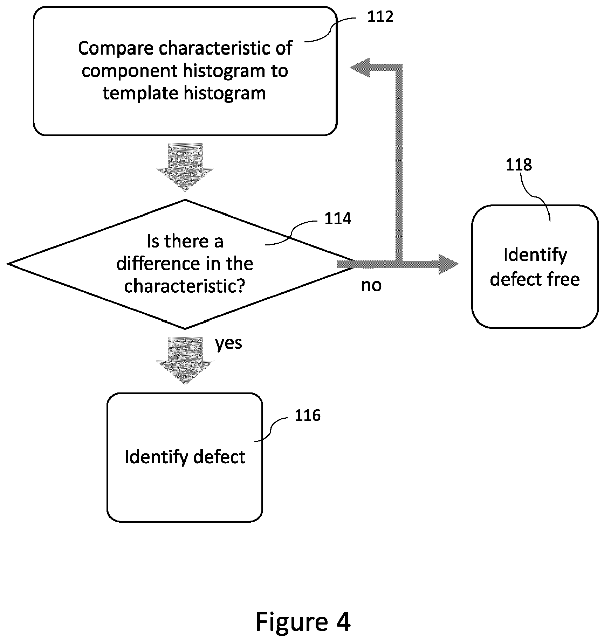

**Figure 4** is a flow chart showing further steps of blocks 108 and 110 to compare the component histogram 150 to the template histogram 160 and to identify a defect. In this example, in block 112 a characteristic of the component histogram 150 is compared against the same characteristic of the template histogram 160. For example, the characteristic may comprise any of peak frequencies of voxel value, integrated total area, standard deviation of voxel value, height of peak frequencies, relative height of a peak frequency such as width at mid height of a bell curve, mean voxel value, width of a frequency bell curve of the voxel value, gradient of a frequency bell curve of the voxel value, median voxel value and/or voxel value at an onset of a curve up to a peak. The onset of the curve up to a peak may require identification of a peak voxel value by finding the voxel value at which the gradient of a curve joining points on the histogram is zero, and determining the onset of a curve at a voxel value above or below the peak voxel value at which the gradient is above or below a threshold gradient.

The characteristic which is compared between the component histogram 150 and the template histogram 160 may comprise multiple characteristics which are combined in a pre-determined equation, or may be based on training data for machine learning. Therefore, the identification of differences may comprise using machine learning or artificial intelligence.

In block 114, the method comprises identifying whether there is a difference in the characteristic between the component histogram 150 and the template histogram 160. For example, the first peak 162 of the template histogram 160 has a voxel value at P1, and the second peak 164 of the template histogram 160 has a voxel value at P2. If the first peak 152 or the second peak 154 of the component histogram 150 are not at the same voxel values as the first peak 162 and second peak 164 respectively of the template histogram 160, then block 114 may determine that there is a difference.

If it is determined, in block 114, that there is a difference, the method 100 proceeds to block 116. In some examples, in block 114, the difference in characteristic between the component histogram 150 and the template histogram 160 may be compared against a threshold, so that, if the difference between the characteristic of the component histogram 150 and the template histogram 160 is above the threshold, it is determined that there is a difference in block 114, and the method 100 proceeds to block 116. If the difference is below the threshold, it is determined that there is no difference, and the method 100 returns to block 112 to compare a different characteristic, or proceeds to block 118 to identify the component 50 as defect free. The threshold may be determined based on the geometry of the component and/or the materials within the component. For example, the threshold difference in a peak voxel count may be dependent on and relative to the voxel count of the peak in the template histogram, such as 5% difference in the voxel count.

It will be appreciated that, in an example where the template histogram represents a component with a known defect, from block 114, the method may proceed to block 116 if it is determined that there is no difference in characteristic between the component histogram and the template histogram, and may proceed to block 118 if it is determined that there is a difference in the characteristic between the component histogram and the template histogram.

This method may be suitable primarily for identifying gross defects which require scrapping or remaking of the component 50. Therefore, an identification that the component is defect free in block 118 may be that the component is free of gross defects which requires scrapping of the component. This presents a computationally efficient method of identifying potential defects, particularly large defects. Such identification of defects can result in efficient scrapping of parts without investing further time and resources in the manufactured component. It will be appreciated that the method 100 can also be made more suitable for identifying smaller defects by dividing the volumetric scan into multiple parts, as this provides more granularity of the data.

The method may be a computer-implemented method, and may be stored as a computer program with computer-readable instructions on a non- transitory computer readable medium which, when read by a computer, causes the performance of the method 100.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method of identifying non-conformance of a manufactured component, the method comprising:
performing a volumetric scan to generate a 3-dimensional (3D) image of a volume of space containing the component, the 3D image comprising a plurality of voxels, each voxel representing a sub-volume within the volume of space and assigned a voxel value relating to properties of the material in the sub-volume;
generating a component histogram giving the frequency of each voxel value within the volume of space; and
comparing the component histogram to a template histogram, and identifying differences between the component histogram and the template histogram, and
based on the comparison, determining whether there is a defect in the component.

2. A method according to claim 1, wherein the comparison comprises comparing a characteristic of the component histogram and the template histogram, wherein the characteristic comprises any of;
peak frequencies of voxel value;
integrated total area;
standard deviation of voxel value;
height of peak frequencies;
mean voxel value;
width of a frequency bell curve;
gradient of a frequency bell curve;
median voxel value; and/or
onset of a curve up to a peak.

3. A method according to claim 1 or 2, wherein determining that there is a defect is based on the comparison of the characteristic of the component histogram to the template histogram showing a difference beyond a threshold.

4. A method according to claim 3, wherein the threshold is determined dependent on the geometry of the component and/or the materials within the component.

5. A method according to any preceding claim, wherein the defect is a gross defect which requires scrapping or remaking of the component.

6. A method according to any preceding claim, wherein the template histogram is derived by performing a volumetric scan on one or more components known to have few or no defects.

7. A method according to any preceding claim, further comprising:
performing thresholding to separate the component from a background within the volume of space,
generating the component histogram based on the voxels from the component only, by removing the voxels from the background.

8. A method according to any preceding claim, comprising:
splitting the volume of space into separate smaller secondary-volumes; and
generating separate component histograms for each secondary-volume and comparing against a respective histogram template.

9. A method according to any preceding claim, comprising performing x-ray computational tomography.

10. A non-transitory computer readable medium comprising computer-readable instructions that, when read by a computer, causes the performance of a method in accordance with any preceding claim.

11. A computer program that, when read by a computer causes the performance of a method in accordance with any of claims 1-9.
